# EUROPEAN PATENT APPLICATION

(11) **EP 3 498 513 A1**
(43) Date of publication of application: **19.06.2019**
(21) Application number: 18210307.7
(22) Date of filing: 05.12.2018
(51) Int. Cl.: B60K 11/00, B60K 11/06, B60H 1/00, B60H 1/14, B60L 58/26

(54) **A METHOD AND SYSTEM FOR CLIMATIZATION OF A PROPULSION BATTERY AND A PASSENGER COMPARTMENT IN A VEHICLE**

(30) Priority: 18.12.2017 SE 1751560
(71) Applicant: Scania CV AB, 151 87 Södertälje (SE)
(72) Inventor: HALL, Ola, 117 67 Stockholm (SE); ÄHRLIG, Linus, 137 37 Västerhaninge (SE)
(74) Representative: Scania CV AB

(57) **Abstract**

The invention relates to a method for climatization of a propulsion battery (4) and a passenger compartment (6) in a vehicle (1), the vehicle (1) comprising: a first radiator (14) connected to the propulsion battery (4), for cooling and heating the propulsion battery (4), a partition wall element (16), which is arranged between a body (18) of the vehicle (1) and the passenger compartment (6), and a first valve element (20), which is arranged to open and close a first body inlet opening (22) in the body (18) and a first compartment outlet opening (24) in the partition wall element (16) The first radiator (14) being arranged in a space (26) formed between the partition wall element (16) and the body (18). The method comprises the step of controlling (s101) the first valve element (20) for directing ambient air and/or air from the passenger compartment (6) through the first radiator (14).The invention also relates to a system (2) for climatization of a propulsion battery (4) and a passenger compartment (6) in a vehicle (1). The invention also relates to a vehicle (1), which is provided with such a system (2).

## Description

### TECHNICAL FIELD

The invention relates to a method and a system for climatization of a propulsion battery and a passenger compartment in a vehicle according to the appended claims.

### BACKGROUND AND PRIOR ART

Propulsion batteries for vehicles and also the power electronics controlling the propulsion of the vehicle may be cooled or heated to reach an operating temperature of the propulsion batteries and the power electronics, so that electric propulsion machines in the vehicle may deliver power needed for propulsion the vehicle.

A passenger compartment in a vehicle may also be heated or cooled. A system for climatization of the passenger compartment may be adapted to regulate the temperature and the humidity in the passenger compartment.

The propulsion battery may be connected to a radiator for cooling and heating the propulsion battery. The radiator may be arranged in a space in the vehicle which may have connection to the ambient air outside the vehicle and also to the passenger compartment. The space may be formed by a partition wall element, which is arranged between a body of the vehicle and the passenger compartment. The body may be a shell of the vehicle having an outer surface. The partition wall element may be an inner panel in the vehicle. Valve elements may be arranged to open and close openings in the body and in the partition wall element for directing air through the radiator. After the air has passed the radiator for cooling or heating of the propulsion battery, the air is discharged from the vehicle. A cooling system for the passenger compartment, such as a passenger AC-system, may be separate from other components in a vehicle that need to be cooled.

The document CN104085414A discloses a vehicle provided with fuel cells, which may be cooled or heated by means of air passing through different radiators arranged in the vehicle.

The document JP2004322872A discloses an air-conditioner for a vehicle, which may comprise a cooling unit with a condenser. Cooled inside air may pass through the condenser before discharged from the vehicle. Thus, the cooling efficiency of a refrigerant within the condenser may be improved and the cooling energy can be effectively utilized for cooling outside air newly introduced into the cabin of the vehicle.

### SUMMARY OF THE INVENTION

However, there may be a need for increase the efficiency of propulsion batteries for a vehicle by cooling or heating the propulsion batteries to an operation temperature. Also, it may be a need to use waste air that has been used for cooling and heating the propulsion batteries or has been used for regulate the climate of the passenger compartment instead of directly discharge the air to the outside of the vehicle. Also, there may be a need for reducing the power needed for heating and cooling of the propulsion batteries and the passenger compartment of a vehicle.

The object of the invention may therefore be to increase the efficiency of propulsion batteries for a vehicle by cooling or heating the propulsion batteries to an operation temperature.

Another object of the invention may also be to use waste air that has been used for cooling and heating the propulsion batteries or has been used for regulate the climate of the passenger compartment instead of directly discharge the air to the outside of the vehicle.

A further object of the invention is to reducing the power needed for heating and cooling of the propulsion batteries and the passenger compartment of a vehicle.

These objects may be achieved with the above-mentioned method and a system for climatization of a propulsion battery and a passenger compartment in a vehicle according to the appended claims.

The vehicle may comprise a first radiator connected to the propulsion battery, for cooling and heating the propulsion battery, a partition wall element, which may be arranged between a body of the vehicle and the passenger compartment, and a first valve element, which may be arranged to open and close a first body inlet opening in the body and a first compartment outlet opening in the partition wall element. The first radiator may be arranged in a space formed between the partition wall element and the body. The body may be a shell of the vehicle having an outer surface. The partition wall element may be an inner panel in the vehicle.

According to the invention the method for climatization of a propulsion battery and a passenger compartment in a vehicle may comprise the step of controlling the first valve element for directing ambient air and/or air from the passenger compartment through the first radiator.

Such method may provide an increase the efficiency of propulsion batteries for a vehicle by cooling or heating the propulsion battery to an operation temperature. Depending on the temperature of the propulsion battery, due to the operation conditions of the vehicle and the temperature in the surroundings of the propulsion battery, the first valve element may be used for directing ambient air and/or air from the passenger compartment through the first radiator. If the temperature of the propulsion battery is higher than the operation temperature of the propulsion battery, the propulsion battery may be cooled to reach the operation temperature. If the temperature of the propulsion battery is lower than the operation temperature of the propulsion battery, the propulsion battery may be heated to reach the operation temperature. The operation temperature may be an optimum temperature range or span. When the propulsion battery operates at a temperature within the optimum temperature span the efficiency of propulsion battery may increase and the endurance of the propulsion battery may increase.

If the temperature of the ambient air is lower than the temperature of the propulsion battery, the first valve element may be controlled for directing ambient air through the first radiator and thus cooling the propulsion battery. However, if the temperature of the ambient air is higher than the temperature of the propulsion battery, the first valve element may be controlled for directing ambient air through the first radiator and thus heating the propulsion battery. If the temperature in the passenger compartment is lower than the temperature of the propulsion battery, the first valve element may be controlled for directing air from the passenger compartment through the first radiator and thus cooling the propulsion battery. However, if the temperature in the passenger compartment is higher than the temperature of the propulsion battery, the first valve element may be controlled for directing air from the passenger compartment through the first radiator and thus heating the propulsion battery. It may also be possible to control the first valve element to direct both ambient air and air from the passenger compartment through the first radiator and thus cooling or heating the propulsion battery depending on the needs.

The air directed through the first radiator, which may emanate from the passenger compartment, may be wasted air that has been used for climatization the passenger compartment.

The expression climatization may be used for regulate the temperature in the propulsion battery and in the passenger compartment. However, expression climatization may also be used for regulate the relative humidity and the content of particles, substances and chemicals in the air in contact with the propulsion battery and in the passenger compartment.

According to an aspect of the invention the method may comprise the step of controlling the first valve element to open the first body inlet opening for directing ambient air through the first radiator for cooling the propulsion battery.

If the temperature of the propulsion battery is higher than the operation temperature of the propulsion battery, the propulsion battery may be cooled to reach the operation temperature. If the temperature of the ambient air is lower than the temperature of the propulsion battery, the first valve element may be controlled for open the first body inlet opening and directing ambient air through the first radiator and thus cooling the propulsion battery. The efficiency of propulsion batteries may thus increase if the propulsion battery may be cooled to the operation temperature.

According to a further aspect of the invention the method may comprise the step of controlling the first valve element to open the first compartment outlet opening for directing air from the passenger compartment through the first radiator for heating the propulsion battery.

If the temperature of the propulsion battery is lower than the operation temperature of the propulsion battery, the propulsion battery may be heated to reach the operation temperature. If the temperature of the passenger compartment is higher than the temperature of the propulsion battery, the first valve element may be controlled for open the first compartment outlet opening and directing air from the passenger compartment through the first radiator and thus heating the propulsion battery. The efficiency of propulsion batteries may thus increase if the propulsion battery may be heated to the operation temperature. This may reduce the power needed for heating the propulsion batteries.

According to a further aspect of the invention the vehicle may further comprise a second valve element arranged to open and close a first body outlet opening in the body. The method my further comprise the further step of controlling the second valve element to close the first body outlet opening for directing heated air to the passenger compartment.

The temperature in the passenger compartment may be adapted to a predetermined temperature, which may be a predetermined optimum temperature and which may be comfortable for passengers in the passenger compartment and also the driver of the vehicle. The predetermined temperature in the passenger compartment may be in the range 15° - 25° C. If the temperature in the passenger compartment is higher than the predetermined temperature in the passenger compartment, the passenger compartment may be cooled to reach the predetermined temperature. If the temperature in the passenger compartment is lower than the predetermined temperature in the passenger compartment, the passenger compartment may be heated to reach the predetermined temperature.

When the second valve element is controlled to close the first body outlet opening for directing heated air to the passenger compartment, the temperature in the passenger compartment may increase. The directed heated air may emanate from ambient air and/or from the passenger compartment that has been directed through the first radiator and thus may have been heated by the first radiator. This may be possible if the propulsion battery and thus the first radiator may have a temperature that is higher than the temperature of ambient air and the air from the passenger compartment. This may reduce the power needed for heating the passenger compartment of the vehicle.

According to a further aspect of the invention the vehicle may further comprise a second valve element arranged to open and close a first body outlet opening in the body. The method may further comprise the further step of controlling the second valve element to open the first body outlet opening for evacuating air that has passed through the first radiator.

Depending on the temperature and also the overall climate in the passenger compartment, the second valve element may be controlled to open the first body outlet opening and thus evacuating air that has passed through the first radiator. If there may be no need to regulate the climate in the passenger compartment all air that has passed the first radiator may be discharged through the first body outlet opening. Alternatively, some of the air that may have passed the first radiator may be directed out through the first body outlet opening and some of the air may be directed to the passenger compartment.

According to a further aspect of the invention the vehicle may further comprise a third valve element arranged to open and close a second body outlet opening in the body. The method may further comprise the further step of controlling the third valve element to open the second body outlet opening for evacuating air from the passenger compartment. The second body outlet opening may be used for evacuating or discharging air from the passenger compartment, so that an effective climatization and ventilation of the passenger compartment is achieved. In order to regulate the climate in the passenger compartment regarding the relative humidity and the content of particles, substances and chemicals in the air in the passenger compartment, waste air from the passenger compartment may be evacuated or discharged from the second body outlet opening and fresh air with low content of humidity and of particles, substances and chemicals may be fed into the passenger compartment through inlet openings in the vehicle body.

According to a further aspect of the invention the vehicle may further comprise a fourth valve element arranged to open and close a second body inlet opening in the body. The method may comprise the further step of controlling the fourth valve element to open the second body inlet opening for directing ambient air to the passenger compartment.

The second body inlet opening may be used for feeding ambient air to the passenger compartment, so that an effective climatization and ventilation of the passenger compartment is achieved. In order to regulate the climate in the passenger compartment regarding the relative humidity and the content of particles, substances and chemicals in the air in the passenger compartment, ambient air with low content of humidity and of particles, substances and chemicals may be fed from the second body inlet opening and into the passenger compartment.

According to an aspect of the invention the method may comprise the step of cooling the ambient air, which may be directed to the passenger compartment.

If the temperature in the passenger compartment is higher than the predetermined temperature in the passenger compartment, the passenger compartment may be cooled to reach the predetermined temperature. When the fourth valve element is controlled to open the second body outlet opening for directing ambient air to the passenger compartment, the temperature of that air may be cooled by a second radiator, which may be connected to an air condition system.

According to an aspect of the invention the method may comprise the step of heating the ambient air, which is directed to the passenger compartment.

If the temperature in the passenger compartment is lower than the predetermined temperature in the passenger compartment, the passenger compartment may be heated to reach the predetermined temperature. When the fourth valve element is controlled to open the second body outlet opening for directing ambient air to the passenger compartment, the temperature of that air may be heated by the second radiator, which may be connected to the air condition system, which may comprise a heat pump.

According to the invention the system for climatization of a propulsion battery and a passenger compartment in a vehicle may comprise a first radiator connected to the propulsion battery, for cooling and heating the propulsion battery, a partition wall element, which is arranged between a body of the vehicle and the passenger compartment, and a first valve element, which is arranged to open and close a first body inlet opening in the body and a first compartment outlet opening in the partition wall element. The first radiator may be arranged in a space formed between the partition wall element and the body. The system may further comprise means for controlling the first valve element for directing ambient air and/or air from the passenger compartment through the first radiator.

Such a system may provide an increase the efficiency of propulsion batteries for a vehicle by cooling or heating the propulsion battery to an operation temperature. Depending on the temperature of the propulsion battery, due to the operation conditions of the vehicle and the temperature in the surroundings of the propulsion battery, the first valve element may be used for directing ambient air and/or air from the passenger compartment through the first radiator. If the temperature of the propulsion battery is higher than the operation temperature of the propulsion battery, the propulsion battery may be cooled to reach the operation temperature. If the temperature of the propulsion battery is lower than the operation temperature of the propulsion battery, the propulsion battery may be heated to reach the operation temperature.

If the temperature of the ambient air is lower than the temperature of the propulsion battery, means, such as a control unit and/or a computer may be used for control the first valve element to direct ambient air through the first radiator and thus cooling the propulsion battery. However, if the temperature of the ambient air is higher than the temperature of the propulsion battery, the means may control the first valve element to direct ambient air through the first radiator and thus heating the propulsion battery. If the temperature in the passenger compartment is lower than the temperature of the propulsion battery, the means may control the first valve element to direct air from the passenger compartment through the first radiator and thus cooling the propulsion battery. However, if the temperature in the passenger compartment is higher than the temperature of the propulsion battery, the means may control the first valve element to direct air from the passenger compartment through the first radiator and thus heating the propulsion battery. It may also be possible for the means to control the first valve element to direct both ambient air and air from the passenger compartment through the first radiator and thus cooling or heating the propulsion battery depending on the needs.

The air directed through the first radiator, which may emanate from the passenger compartment, may be wasted air that has been used for climatization the passenger compartment.

According to an aspect of the invention the system may further comprise means for controlling the first valve element to open the first body inlet opening for directing ambient air through the first radiator for cooling the propulsion battery.

If the temperature of the propulsion battery is higher than the operation temperature of the propulsion battery, the propulsion battery may be cooled to reach the operation temperature. If the temperature of the ambient air is lower than the temperature of the propulsion battery, means may control the first valve element to open the first body inlet opening and directing ambient air through the first radiator and thus cooling the propulsion battery. The efficiency of propulsion batteries may thus increase if the propulsion battery may be cooled to the operation temperature.

According to an aspect of the invention the system may further comprise means for controlling the first valve element to open the first compartment outlet opening for directing air from the passenger compartment through the first radiator for heating the propulsion battery.

If the temperature of the propulsion battery is lower than the operation temperature of the propulsion battery, the propulsion battery may be heated to reach the operation temperature. If the temperature of the passenger compartment is higher than the temperature of the propulsion battery, means may control the first valve element to open the first compartment outlet opening and directing air from the passenger compartment through the first radiator and thus heating the propulsion battery. The efficiency of propulsion batteries may thus increase if the propulsion battery may be heated to the operation temperature. This may reduce the power needed for heating the propulsion batteries.

According to an aspect of the invention the system may further comprise a second valve element arranged to open and close a first body outlet opening in the body, and means for controlling the second valve element to close the first body outlet opening for directing heated air to the passenger compartment.

The temperature in the passenger compartment may be adapted to a predetermined temperature which may be comfortable for passengers in the passenger compartment and also the driver of the vehicle. The predetermined temperature in the passenger compartment may be in the range 15° - 25° C. If the temperature in the passenger compartment is higher than the predetermined temperature in the passenger compartment, the passenger compartment may be cooled to reach the predetermined temperature. If the temperature in the passenger compartment is lower than the predetermined temperature in the passenger compartment, the passenger compartment may be heated to reach the predetermined temperature.

When means is used to control the second valve element to close the first body outlet opening for directing heated air to the passenger compartment, the temperature in the passenger compartment may increase. The directed heated air may emanate from ambient air and/or from the passenger compartment that has been directed through the first radiator and thus may have been heated by the first radiator. This may be possible if the propulsion battery and thus the first radiator may have a temperature that is higher than the temperature of ambient air and the air from the passenger compartment. This may reduce the power needed for heating the passenger compartment of the vehicle.

According to an aspect of the invention the system may further comprise a second valve element arranged to open and close a first body outlet opening in the body, and means for controlling the second valve element to open the first body outlet opening for evacuating air that has passed through the first radiator.

Depending on the temperature and also the overall climate in the passenger compartment, means may be used to control the second valve element to open the first body outlet opening and thus evacuating air that has passed through the first radiator. If there may be no need to regulate the climate in the passenger compartment all air that has passed the first radiator may be discharged through the first body outlet opening. Alternatively, some of the air that may have passed the first radiator may be directed out through the first body outlet opening and some of the air may be directed to the passenger compartment.

The above-mentioned objects are also achieved by a vehicle provided with a system according to the appended claims.

The above-mentioned objects are also achieved by a computer program product and computer-readable according to the appended claims.

Additional objectives, advantages and novel features of the invention will be apparent to one skilled in the art from the following details, and through exercising the invention. While the invention is described below, it should be apparent that the invention may be not limited to the specifically described details. One skilled in the art, having access to the teachings herein, will recognize additional applications, modifications and incorporations in other areas, which are within the scope of the invention.

### BRIEF DESCRIPTION OF THE DRAWINGS

Below is a description of, as examples, preferred embodiments with reference to the enclosed drawings, in which:
Fig. 1 schematically illustrates a vehicle in a side view with a system for climatization of a propulsion battery and a passenger compartment according to an embodiment,
Fig. 2 schematically illustrates the vehicle according to fig. 1, showing air flow directions according to an embodiment,
Fig. 3 schematically illustrates the vehicle according to fig. 1, showing air flow directions according to an embodiment,
Fig. 4 schematically illustrates the vehicle according to fig. 1, showing air flow directions according to an embodiment,
Fig. 5 schematically illustrates the vehicle according to fig. 1, showing air flow directions according to an embodiment,
Fig. 6 schematically illustrates the vehicle according to fig. 1, showing air flow directions according to an embodiment,
Fig. 7 shows a flow chart for a method for climatization of a propulsion battery and a passenger compartment of a vehicle according to an embodiment, and
Fig. 8 shows a diagram of one version of a system for shifting the gearbox in the powertrain of the vehicle.

### DETAILED DESCRIPTION OF THE DRAWINGS

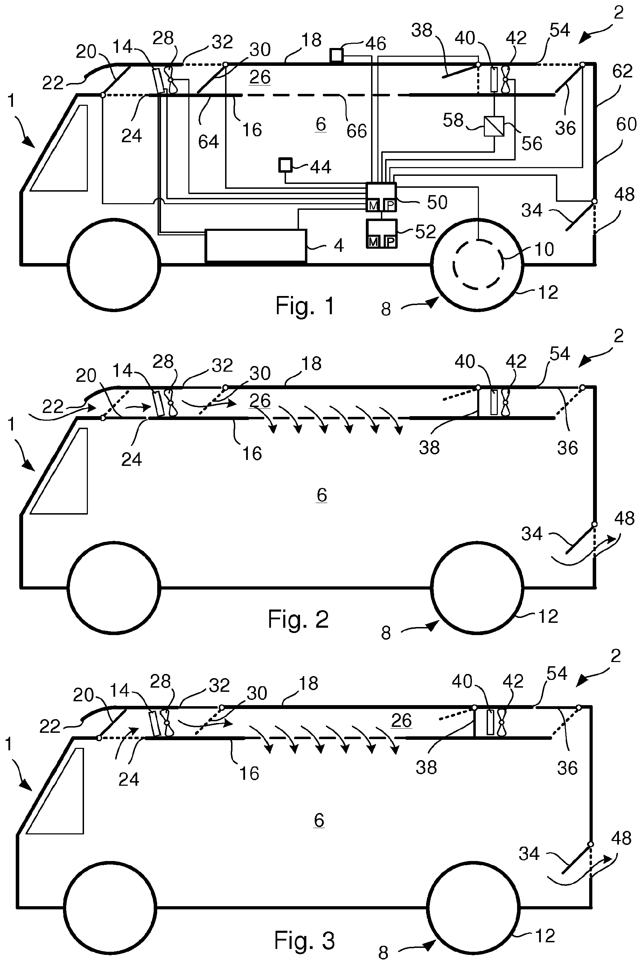

Fig. 1 shows schematically a vehicle 1 in a side view, provided with a system 2 for climatization of a propulsion battery 4 and a passenger compartment 6 according to an embodiment. The system 2 may comprise a powertrain 8, which may have an electric propulsion machine 10 as propulsion source. The electric propulsion machine 10 may be coupled to drive wheels 12 of the vehicle 1. The system 2 may further comprise a first radiator 14 connected to the propulsion battery 4, for cooling and heating the propulsion battery 4, a partition wall element 16, which is arranged between a body 18 of the vehicle 1 and the passenger compartment 6, and a first valve element 20, which is arranged to open and close a first body inlet opening 22 in the body 18 and a first compartment outlet opening 24 in the partition wall element 16. The first radiator 14 may be arranged in a space 26 formed between the partition wall element 16 and the body 18. The system 2 may further comprise a control unit 50 and/or a computer 52 for controlling the first valve element 20 for directing ambient air and/or air from the passenger compartment 6 through the first radiator 14.

The control unit 50 and/or the computer 52 may be connected to the first valve element 20, the propulsion battery 4, the electric propulsion machine 10, the first radiator 14, a first fan 28 and a second valve element 30. The first fan 28 may generate an air flow through the first radiator 14. The first fan 28 may be arranged upstream or downstream of the first radiator 14. The first fan 28 may be arranged in the space 26 formed between the partition wall element 16 and the body 18. The second valve element 30 may be arranged to open and close a first body outlet opening 32 in the body 18.

The control unit 50 and/or the computer 52 may also be connected to a third valve element 34, a fourth valve element 36, a fifth valve element 38, a second radiator 40 and a second fan 42. The third valve element 34 may be arranged to open and close a second body outlet opening 48 in the body 18. The fourth valve element 36 may be arranged to open and close a second body inlet opening 54 in the body 18. The fifth valve element 38 may be arranged for controlling recirculation of air from the passenger compartment 6 for heating or cooling of the recirculated air. The fifth valve element 38 may as an alternative be an one way valve, which may open for an air flow in a direction from the in the second radiator 40 and towards the fifth valve element 38, but may close for an air flow in the opposite direction. Thus, if the air pressure at the second radiator 40 is lower than the air pressure at the opposite side of the fifth valve element 38, the fifth valve element 38 may be closed. The second radiator 40 may be connected to an air condition system 56 for cooling or heating air, which may be directed to the passenger compartment 6. The second fan 42 may generate an air flow through the second radiator 40. The second fan 42 may be arranged up streams or down streams of the second radiator 40. The second fan 42 may be arranged in the space 26 formed between the partition wall element 16 and the body 18. The body 18 may be a shell 60 of the vehicle 1 having an outer surface 62. In the outer surface 62 of the shell 60, the first body inlet opening 22, the second body outlet opening 48, the second body inlet opening 54 and the first body outlet opening 32 may be arranged. The partition wall element 16 may be an inner panel 64 in the vehicle. The first compartment outlet opening 24 may be arranged in the inner panel 64. Also, the inner panel 64 may comprise a number of perforations 66 for allowing air from the space 26 to enter the passenger compartment 6.

The control unit 50 and/or the computer 52 may also be connected to a first sensor 44 and a second sensor 46. The first sensor 44 may be arranged in the passenger compartment 6 for sensing the climate in the passenger compartment 6, such as the temperature, relative humidity and the content of particles, substances and chemicals in the air in the passenger compartment 6 and also in contact with the propulsion battery 4. The second sensor 46 may be arranged outside the vehicle 1 to sense the temperature of the ambient air. Since the control unit 50 and/or the computer 52 may be connected to the propulsion battery 4 also the temperature of the propulsion battery 4 may be sensed by the control unit 50 and/or the computer 52.

A computer program product P may comprise instructions which, when the program is executed by the computer 52, may cause the computer 52 to carry out method steps for climatization of the propulsion battery 4 and the passenger compartment 6.

Depending on the temperature of the propulsion battery 4, due to the operation conditions of the vehicle 1 and the temperature in the surroundings of the propulsion battery 4, the first valve element 20 may be used for directing ambient air and/or air from the passenger compartment 6 through the first radiator 14. If the temperature of the propulsion battery 4 is higher than the operation temperature of the propulsion battery 4, the propulsion battery 4 may be cooled to reach the operation temperature. If the temperature of the propulsion battery 4 is lower than the operation temperature of the propulsion battery 4, the propulsion battery 4 may be heated to reach the operation temperature.

If the temperature of the ambient air is lower than the temperature of the propulsion battery 4, the control unit 50 and/or the computer 52 may control the first valve element 20 to direct ambient air through the first radiator 14 and thus cooling the propulsion battery 4. However, if the temperature of the ambient air is higher than the temperature of the propulsion battery 4, the control unit 50 and/or the computer 52 may control the first valve element 20 to direct ambient air through the first radiator 14 and thus heating the propulsion battery 4. If the temperature in the passenger compartment 6 is lower than the temperature of the propulsion battery 4, the control unit 50 and/or the computer 52 may control the first valve element 20 to direct air from the passenger compartment 6 through the first radiator 14 and thus cooling the propulsion battery 4. However, if the temperature in the passenger compartment 6 is higher than the temperature of the propulsion battery 4, the control unit 50 and/or the computer 52 may control the first valve element 20 to direct air from the passenger compartment 6 through the first radiator 14 and thus heating the propulsion battery 4. It may also be possible for the control unit 50 and/or the computer 52 may control the first valve element 20 to direct both ambient air and air from the passenger compartment 6 through the first radiator 14 and thus cooling or heating the propulsion battery 4 depending on the needs.

The air directed through the first radiator 14, which may emanate from the passenger compartment 6, may be wasted air that has been used for climatization the passenger compartment 6.

Fig. 2 schematically illustrates the vehicle 1 according to fig. 1, showing air flow directions according to an embodiment. The control unit 50 and/or the computer 52 may control the first valve element 20 to open the first body inlet opening 22 for directing ambient air through the first radiator 14 for cooling the propulsion battery 4. If the temperature of the propulsion battery 4 is higher than the operation temperature of the propulsion battery 4, the propulsion battery 4 may be cooled to reach the operation temperature. If the temperature of the ambient air is lower than the temperature of the propulsion battery 4, the control unit 50 and/or the computer 52 may control the first valve element 20 to open the first body inlet opening 22 and directing ambient air through the first radiator 14 and thus cooling the propulsion battery 4. The efficiency of the propulsion battery 4 may thus increase if the propulsion battery 4 may be cooled to the operation temperature. Also, the endurance of the propulsion battery 4 may increase if the propulsion battery 4 may be cooled to the operation temperature.

Fig. 3 schematically illustrates the vehicle 1 according to fig. 1, showing air flow directions according to an embodiment. The control unit 50 and/or the computer 52 may control the first valve element 20 to open the first compartment outlet opening 24 for directing air from the passenger compartment 6 through the first radiator 14 for heating the propulsion battery 4. If the temperature of the propulsion battery 4 is lower than the operation temperature of the propulsion battery 4, the propulsion battery 4 may be heated to reach the operation temperature. If the temperature of the passenger compartment 6 is higher than the temperature of the propulsion battery 4, the control unit 50 and/or the computer 52 may control the first valve element 20 to open the first compartment outlet opening 24 and directing air from the passenger compartment 6 through the first radiator 14 and thus heating the propulsion battery 4. The efficiency of the propulsion battery 4 may thus increase if the propulsion battery 4 may be heated to the operation temperature. This may reduce the power needed for heating the propulsion battery 4. Also, the endurance of the propulsion battery 4 may increase if the propulsion battery 4 may be heated to the operation temperature.

According to fig. 2, the control unit 50 and/or the computer 52 may control the second valve element 30 arranged to open and close the first body outlet opening 32 in the body 18, and the control unit 50 and/or the computer 52 may control the second valve element 30 to close the first body outlet opening 32 for directing heated air to the passenger compartment 6. The temperature in the passenger compartment 6 may be adapted to a predetermined temperature which may be comfortable for passengers in the passenger compartment 6 and also the driver of the vehicle 1. The predetermined temperature in the passenger compartment 6 may be in the range 15° - 25° C. If the temperature in the passenger compartment 6 is higher than the predetermined temperature in the passenger compartment 6, the passenger compartment 6 may be cooled to reach the predetermined temperature. If the temperature in the passenger compartment 6 is lower than the predetermined temperature in the passenger compartment 6, the passenger compartment 6 may be heated to reach the predetermined temperature. When the control unit 50 and/or the computer 52 may control the second valve element 30 to close the first body outlet opening 32 for directing heated air to the passenger compartment 6, the temperature in the passenger compartment 6 may increase. The directed heated air may emanate from ambient air and/or from the passenger compartment 6 that has been directed through the first radiator 14 and thus may have been heated by the first radiator 14. This may be possible if the propulsion battery 4 and thus the first radiator 14 may have a temperature that is higher than the temperature of ambient air and the air from the passenger compartment 6. This may reduce the power needed for heating the passenger compartment 6 of the vehicle 1.

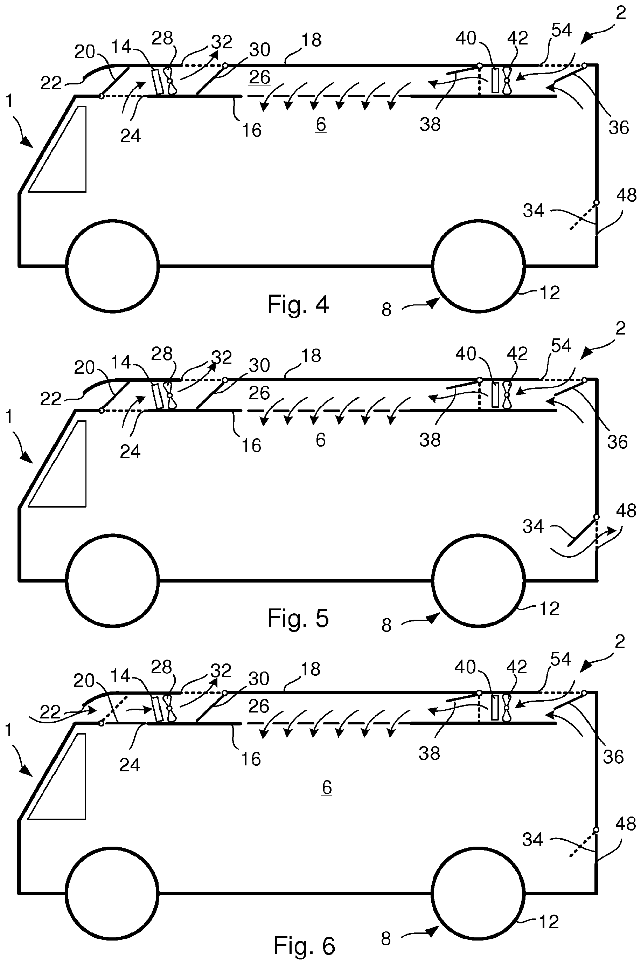

Fig. 4 schematically illustrates the vehicle 1 according to fig. 1, showing air flow directions according to an embodiment. The second valve element 30 may be arranged to open and close a first body outlet opening 32 in the body 18, and the control unit 50 and/or the computer 52 may control the second valve element 30 to open the first body outlet opening 32 for evacuating air that has passed through the first radiator 14.

Depending on the temperature and also the overall climate in the passenger compartment 6, the control unit 50 and/or the computer 52 may control the second valve element 30 to open the first body outlet opening 32 and thus evacuating air that has passed through the first radiator 14. If there may be no need to regulate the climate in the passenger compartment 6 all air that has passed the first radiator 14 may be discharged through the first body outlet opening 32. Alternatively, some of the air that may have passed the first radiator 14 may be directed out through the first body outlet opening 32 and some of the air may be directed to the passenger compartment 6.

Fig. 5 schematically illustrates the vehicle 1 according to fig. 1, showing air flow directions according to an embodiment. The ambient air, which is directed to the passenger compartment 6 may be cooled. If the temperature in the passenger compartment 6 is higher than the predetermined temperature in the passenger compartment 6, the passenger compartment 6 may be cooled to reach the predetermined temperature. When the fourth valve element 36 is controlled to open the second body outlet opening 48 for directing ambient air to the passenger compartment 6, the temperature of that air may be cooled by a second radiator 40, which may be connected to an air condition system 2.

Fig. 6 schematically illustrates the vehicle 1 according to fig. 1, showing air flow directions according to an embodiment. The ambient air, which is directed to the passenger compartment 6 may be heated. If the temperature in the passenger compartment 6 is lower than the predetermined temperature in the passenger compartment 6, the passenger compartment 6 may be heated to reach the predetermined temperature. When the fourth valve element 36 is controlled to open the second body outlet opening 48 for directing ambient air to the passenger compartment 6, the temperature of that air may be heated by the second radiator 40, which may be connected to the air condition system 2, which may comprise a heat pump.

The system 2 may utilize aerodynamically forces to create an air flow into the first body inlet opening 22 and through the first radiator 14. The created air flow may decrease the rotational speed of the first fan 28 and thus reduce any noise from the first fan 28. The partition wall element 16 may shape two air ducts, one in each side of the vehicle 1, in which the created air flow may be varied, depending on the need of heating or cooling of the propulsion battery 4 and the passenger compartment 6.

If the propulsion battery 4 need to be heated and the temperature in the passenger compartment 6 may be higher than the ambient temperature, the first valve element 20 may be controlled for closing the first body inlet opening 22. The second valve element 30 may be controlled for opening the first body outlet opening 32. The speed of the first fan 28 may be increased in relation to the difference between the actual propulsion battery 4 temperature and a predetermined propulsion battery 4 temperature. The third valve element 34 may be controlled for gradually closing the second body outlet opening 48.

If the passenger compartment 6 need to be heated and the temperature in the passenger compartment 6 may be lower than the air temperature after the first radiator 14, a heat pump may be turned off so that the second radiator 40 may not deliver heat. The first valve element 20 may be controlled for opening the first body inlet opening 22. The second valve element 30 may be controlled for closing the first body outlet opening 32. However, if the temperature in the passenger compartment 6 may be higher than the air temperature after the first radiator 14, the heat pump may be turned on and the second radiator 40 may deliver heat. The first valve element 20 may be controlled for opening the first body inlet opening 22. The second valve element 30 may be controlled for opening the first body outlet opening 32.

If the propulsion battery 4 need to be cooled and the temperature in the passenger compartment 6 may be lower than the ambient temperature, the first valve element 20 may be controlled for closing the first body inlet opening 22. The second valve element 30 may be controlled for opening the first body outlet opening 32. The speed of the first fan 28 may be increased in relation to the difference between the actual propulsion battery 4 temperature and a predetermined propulsion battery 4 temperature. The third valve element 34 may be controlled for gradually closing the second body outlet opening 48. However, if the temperature in the passenger compartment 6 may be higher than the ambient temperature, the first valve element 20 may be controlled for opening the first body inlet opening 22. The second valve element 30 may be controlled for opening the first body outlet opening 32. The speed of the first fan 28 may be increased in relation to the difference between the actual propulsion battery 4 temperature and a predetermined propulsion battery 4 temperature.

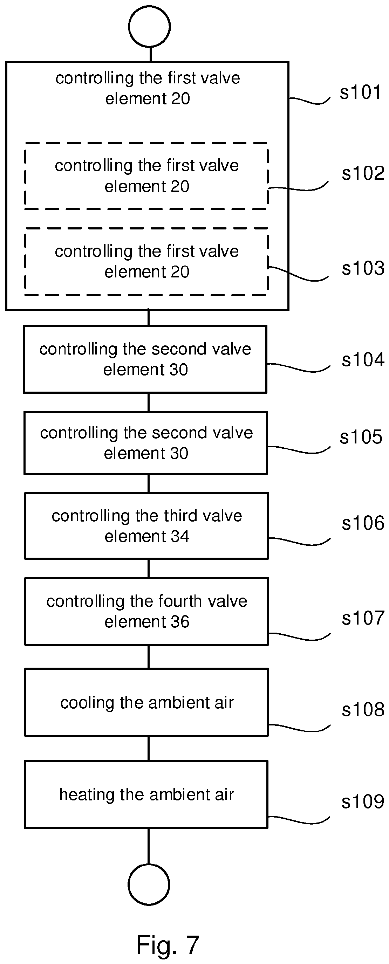

Fig. 7 shows a flow chart for a method for climatization of a propulsion battery 4 and a passenger compartment 6 in a vehicle 1.

The vehicle 1 may comprise the first radiator 14 connected to the propulsion battery 4, for cooling and heating the propulsion battery 4, the partition wall element 16, which may be arranged between a body 18 of the vehicle 1 and the passenger compartment 6, and the first valve element 20, which may be arranged to open and close a first body inlet opening 22 in the body 18 and the first compartment outlet opening 24 in the partition wall element 16. The first radiator 14 may be arranged in the space 26 formed between the partition wall element 16 and the body 18.

The method may comprise the step of controlling s101 the first valve element 20 for directing ambient air and/or air from the passenger compartment 6 through the radiator.

Such method may provide an increase the efficiency of a propulsion battery 4 for a vehicle 1 by cooling or heating the propulsion battery 4 to an operation temperature. Depending on the temperature of the propulsion battery 4, due to the operation conditions of the vehicle 1 and the temperature in the surroundings of the propulsion battery 4, the first valve element 20 may be used for directing ambient air and/or air from the passenger compartment 6 through the radiator. If the temperature of the propulsion battery 4 is higher than the operation temperature of the propulsion battery 4, the propulsion battery 4 may be cooled to reach the operation temperature. If the temperature of the propulsion battery 4 is lower than the operation temperature of the propulsion battery 4, the propulsion battery 4 may be heated to reach the operation temperature.

If the temperature of the ambient air is lower than the temperature of the propulsion battery 4, the first valve element 20 may be controlled for directing ambient air through the radiator and thus cooling the propulsion battery 4. However, if the temperature of the ambient air is higher than the temperature of the propulsion battery 4, the first valve element 20 may be controlled for directing ambient air through the radiator and thus heating the propulsion battery 4. If the temperature in the passenger compartment 6 is lower than the temperature of the propulsion battery 4, the first valve element 20 may be controlled for directing air from the passenger compartment 6 through the radiator and thus cooling the propulsion battery 4. However, if the temperature in the passenger compartment 6 is higher than the temperature of the propulsion battery 4, the first valve element 20 may be controlled for directing air from the passenger compartment 6 through the radiator and thus heating the propulsion battery 4. It may also be possible to control the first valve element 20 to direct both ambient air and air from the passenger compartment 6 through the radiator and thus cooling or heating the propulsion battery 4 depending on the needs.

The method may comprise the step of controlling s102 the first valve element 20 to open the first body inlet opening 22 for directing ambient air through the radiator for cooling the propulsion battery 4.

If the temperature of the propulsion battery 4 is higher than the operation temperature of the propulsion battery 4, the propulsion battery 4 may be cooled to reach the operation temperature. If the temperature of the ambient air is lower than the temperature of the propulsion battery 4, the first valve element 20 may be controlled for open the first body inlet opening 22 and directing ambient air through the radiator and thus cooling the propulsion battery 4. The efficiency of the propulsion battery 4 may thus increase if the propulsion battery 4 may be cooled to the operation temperature.

The method may comprise the step of controlling s103 the first valve element 20 to open the first compartment outlet opening 24 for directing air from the passenger compartment 6 through the radiator for heating the propulsion battery 4.

If the temperature of the propulsion battery 4 is lower than the operation temperature of the propulsion battery 4, the propulsion battery 4 may be heated to reach the operation temperature. If the temperature of the passenger compartment 6 is higher than the temperature of the propulsion battery 4, the first valve element 20 may be controlled for open the first compartment outlet opening 24 and directing air from the passenger compartment 6 through the radiator and thus heating the propulsion battery 4. The efficiency of the propulsion battery 4 may thus increase if the propulsion battery 4 may be heated to the operation temperature. This may reduce the power needed for heating the propulsion battery 4.

The vehicle 1 may further comprise the second valve element 30 arranged to open and close a first body outlet opening 32 in the body 18. The method my comprise the further step of controlling s104 the second valve element 30 to close the first body outlet opening 32 for directing heated air to the passenger compartment 6.

The temperature in the passenger compartment 6 may be adapted to a predetermined temperature which may be comfortable for passengers in the passenger compartment 6 and also the driver of the vehicle 1. The predetermined temperature in the passenger compartment 6 may be in the range 15° - 25° C. If the temperature in the passenger compartment 6 is higher than the predetermined temperature in the passenger compartment 6, the passenger compartment 6 may be cooled to reach the predetermined temperature. If the temperature in the passenger compartment 6 is lower than the predetermined temperature in the passenger compartment 6, the passenger compartment 6 may be heated to reach the predetermined temperature.

When the second valve element 30 is controlled to close the first body outlet opening 32 for directing heated air to the passenger compartment 6, the temperature in the passenger compartment 6 may increase. The directed heated air may emanate from ambient air and/or from the passenger compartment 6 that has been directed through the first radiator 14 and thus may have been heated by the first radiator 14. This may be possible if the propulsion battery 4 and thus the first radiator 14 may have a temperature that is higher than the temperature of ambient air and the air from the passenger compartment 6. This may reduce the power needed for heating the passenger compartment 6 of the vehicle 1.

The vehicle 1 may further comprise the second valve element 30 arranged to open and close a first body outlet opening 32 in the body 18. The method may comprise the further step of controlling s105 the second valve element 30 to open the first body outlet opening 32 for evacuating air that has passed through the first radiator 14.

Depending on the temperature and also the overall climate in the passenger compartment 6, the second valve element 30 may be controlled to open the first body outlet opening 32 and thus evacuating air that has passed through the first radiator 14. If there may be no need to regulate the climate in the passenger compartment 6 all air that has passed the first radiator 14 may be discharged through the first body outlet opening 32. Alternatively, some of the air that may have passed the first radiator 14 may be directed out through the first body outlet opening 32 and some of the air may be directed to the passenger compartment 6.

The third valve element 34 may be arranged to open and close the second body outlet opening 48 in the body 18. The method may comprise the further step of controlling s106 the third valve element 34 to open the second body outlet opening 48 for evacuating air from the passenger compartment 6. The second body outlet opening 48 may be used for evacuating or discharging air from the passenger compartment 6, so that an effective climatization and ventilation of the passenger compartment 6 is achieved. In order to regulate the climate in the passenger compartment 6 regarding the relative humidity and the content of particles, substances and chemicals in the air in the passenger compartment 6, waste air from the passenger compartment 6 may be evacuated or discharged from the second body outlet opening 48 and fresh air with low content of humidity and of particles, substances and chemicals may be fed into the passenger compartment 6 through inlet openings in the vehicle 1 body 18.

The vehicle 1 may further comprise the fourth valve element 36 arranged to open and close a second body inlet opening 54 in the body 18. The method may comprise the further step of controlling s107 the fourth valve element 36 to open the second body inlet opening 54 for directing ambient air to the passenger compartment 6.

The second body inlet opening 54 may be used for feeding ambient air to the passenger compartment 6, so that an effective climatization and ventilation of the passenger compartment 6 is achieved. In order to regulate the climate in the passenger compartment 6 regarding the relative humidity and the content of particles, substances and chemicals in the air in the passenger compartment 6, ambient air with low content of humidity and of particles, substances and chemicals may be fed from the second body inlet opening 54 and into the passenger compartment 6.

The method may comprise the step of cooling s108 the ambient air, which may be directed to the passenger compartment 6.

If the temperature in the passenger compartment 6 is higher than the predetermined temperature in the passenger compartment 6, the passenger compartment 6 may be cooled to reach the predetermined temperature. When the fourth valve element 36 is controlled to open the second body outlet opening 48 for directing ambient air to the passenger compartment 6, the temperature of that air may be cooled by a second radiator 40, which may be connected to the air condition system 56.

The method may comprise the step of heating s109 the ambient air, which may be directed to the passenger compartment 6.

If the temperature in the passenger compartment 6 is lower than the predetermined temperature in the passenger compartment 6, the passenger compartment 6 may be heated to reach the predetermined temperature. When the fourth valve element 36 is controlled to open the second body outlet opening 48 for directing ambient air to the passenger compartment 6, the temperature of that air may be heated by the second radiator 40, which may be connected to the air condition system 56, which may comprise a heat pump 58. Both the air condition system 56 and the heat pump 58 may be connected to the control unit 50 and/or the computer 52.

The method may be finished after step s109. The steps of the method do not necessarily have to be performed in the presented order. Some of the steps may also be performed in parallel.

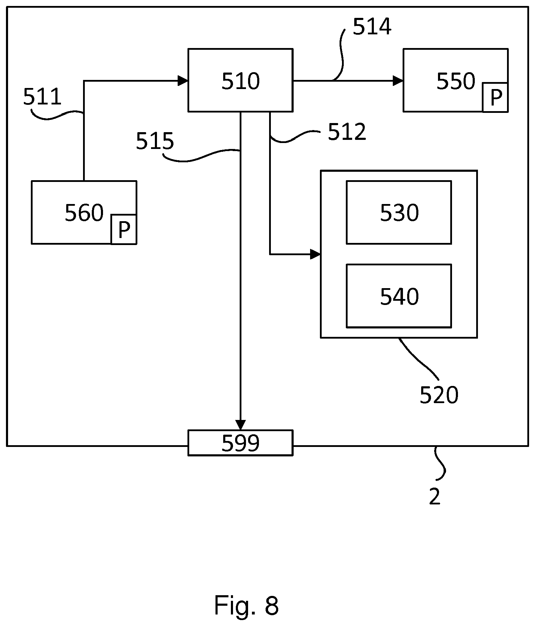

Figure 8 shows a diagram of one version of the system 2 for climatization of the propulsion battery 4 and the passenger compartment 6 in a vehicle 1. The control unit 50 described with reference to fig. 1 may in one version comprise the system 2. The system 2 may comprise a non-volatile memory 520, a data processing unit 510 and a read/write memory 550. The non-volatile memory 520 has a first memory element 530 in which a computer program, e.g. an operating system, may be stored for controlling the function of the system 2. The system 2 further may comprise a bus controller, a serial communication port, I/O means, an A/D converter, a time and date input and transfer unit, an event counter and an interruption controller (not depicted). The non-volatile memory 520 may also have a second memory element 540.

The computer program product may comprise routines for controlling the climatization of the propulsion battery 4 and the passenger compartment 6 in a vehicle 1. A mode-diagram might be stored in the non-volatile memory. The computer program product P may comprise routines for climatization of the propulsion battery 4 and the passenger compartment 6 in a vehicle 1. This may at least partly be performed by means of the control unit 50 for controlling any of the components connected to the control unit 50 and/or the computer 52. This may comprise accessing information form said non-volatile memory, such as information regarding the temperature, the relative humidity and the content of particles, substances and chemicals in the air in contact with the propulsion battery 4 and in the passenger compartment 6.

The computer program product P may comprise routines for determining the climatization of the propulsion battery 4 and the passenger compartment 6 in a vehicle 1. This may at least partly be performed by means of the first control unit 50. This may comprise receiving information from any of the sensors. This may comprise receiving this information repeatedly. The program P may be stored in an executable form or in compressed form in a memory 560 and/or in a read/write memory 550.

Where it may be stated that the data processing unit 510 performs a certain function, it means that it conducts a certain part of the program which may be stored in the memory 560 or a certain part of the program which may be stored in the read/write memory 550.

The data processing device 510 can communicate with a data port 599 via a data bus 515. The non-volatile memory 520 may be intended for communication with the data processing unit 510 via a data bus 512. The separate memory 560 may be intended to communicate with the data processing unit via a data bus 511. The read/write memory 550 may be arranged to communicate with the data processing unit 510 via a data bus 514. When data are received on the data port 599, they can be stored temporarily in the second memory element 540. When input data received have been temporarily stored, the data processing unit 510 can be prepared to conduct code execution as described above.

Parts of the methods herein described may be conducted by the system 2 by means of the data processing unit 510 which runs the program stored in the memory 560 or the read/write memory 550. When the system 2 runs the program, methods herein described are executed.

The foregoing description of the embodiments has been furnished for illustrative and descriptive purposes. It is not intended to be exhaustive, or to limit the embodiments to the variants described. Many modifications and variations will obviously be apparent to one skilled in the art. The embodiments have been chosen and described in order to best explicate principles and practical applications, and to thereby enable one skilled in the art to understand the embodiments in terms of its various embodiments and with the various modifications that are applicable to its intended use. The components and features specified above may, within the framework of the embodiments, be combined between different embodiments specified.

It should be noted that the system 2 according to the embodiment can be arranged to perform any of the steps or actions described in relation to the method. It should also be understood that the method according to the embodiment can further comprise any of the actions attributed to a feature of the system 2 described. The same applies to the computer program product and the computer-readable medium.

## Claims

1. A method for climatization of a propulsion battery (4) and a passenger compartment (6) in a vehicle (1), the vehicle (1) comprising:
a first radiator (14) connected to the propulsion battery (4), for cooling and heating the propulsion battery (4),
a partition wall element (16), which is arranged between a body (18) of the vehicle (1) and the passenger compartment (6), and
a first valve element (20), which is arranged to open and close a first body inlet opening (22) in the body (18) and a first compartment outlet opening (24) in the partition wall element (16);
the first radiator (14) being arranged in a space (26) formed between the partition wall element (16) and the body (18),
wherein the method comprises the step of:
- controlling (s101) the first valve element (20) for directing ambient air and/or air from the passenger compartment (6) through the first radiator (14).

2. The method according to claim 1, comprising the step of:
- controlling (s102) the first valve element (20) to open the first body inlet opening (22) for directing ambient air through the first radiator (14) for cooling the propulsion battery (4).

3. The method according to claim 1, comprising the step of:
- controlling (s103) the first valve element (20) to open the first compartment outlet opening (24) for directing air from the passenger compartment (6) through the radiator for heating the propulsion battery (4).

4. The method according to any one of the preceding claims, the vehicle (1) further comprising:
a second valve element (30) arranged to open and close a first body outlet opening (32) in the body (18),
wherein the method comprises the further step of:
- controlling (s104) the second valve element (30) to close the first body outlet opening (32) for directing heated air to the passenger compartment (6).

5. The method according to any one of claims 1 - 3, the vehicle (1) further comprising:
a second valve element (30) arranged to open and close a first body outlet opening (32) in the body (18),
wherein the method comprises the further step of:
- controlling (s105) the second valve element (30) to open the first body outlet opening (32) for evacuating air that has passed through the first radiator (14).

6. The method according to any one of the preceding claims, the vehicle (1) further comprising:
a third valve element (34) arranged to open and close a second body outlet opening (48) in the body (18),
wherein the method comprises the further step of:
- controlling (s106) the third valve element (34) to open the second body outlet opening (48) for evacuating air from the passenger compartment (6).

7. The method according to any one of the preceding claims, the vehicle (1) further comprising:
a fourth valve element (36) arranged to open and close a second body inlet opening (54) in the body (18),
wherein the method comprises the further step of:
- controlling (s107) the fourth valve element (36) to open the second body inlet (54) opening for directing ambient air to the passenger compartment (6).

8. The method according to claim 7, comprising the further step of:
cooling (s108) the ambient air, which is directed to the passenger compartment (6).

9. The method according to claim 7, comprising the further step of:
heating (s109) the ambient air, which is directed to the passenger compartment (6).

10. A computer program product (P) comprising instructions which,
when the program is executed by a computer (52), cause the computer (52) to carry out the method according to any one of claim 1-9.

11. A computer-readable medium comprising instructions which,
when executed by a computer (52), cause the computer (52) to carry out the method according to any one of claim 1-9.

12. A system (2) for climatization of a propulsion battery (4) and a passenger compartment (6) in a vehicle (1), the system (2) comprising:
a first radiator (14) connected to the propulsion battery (4), for cooling and heating the propulsion battery (4),
a partition wall element (16), which is arranged between a body (18) of the vehicle (1) and the passenger compartment (6), and
a first valve element (20), which is arranged to open and close a first body inlet opening (22) in the body (18) and a first compartment outlet opening (24) in the partition wall element (16);
the first radiator (14) being arranged in a space (26) formed between the partition wall element (16) and the body (18),
wherein the system (2) comprises:
- means (50, 52) for controlling the first valve element (20) for directing ambient air and/or air from the passenger compartment (6) through the first radiator (14).

13. The system (2) according to claim 12, comprising:
- means (50, 52) for controlling the first valve element (20) to open the first body inlet opening (22) for directing ambient air through the first radiator (14) for cooling the propulsion battery (4).

14. The system (2) according to claim 12, comprising:
- means (50, 52) for controlling the first valve element (20) to open the first compartment outlet opening (24) for directing air from the passenger compartment (6) through the first radiator (14) for heating the propulsion battery (4).

15. The system (2) according to any one of claims 12 - 14, further comprising:
a second valve element (30) arranged to open and close a first body outlet opening (32) in the body (18); and,
- means (50, 52) for controlling the second valve element (30) to close the first body outlet opening (32) for directing heated air to the passenger compartment (6).

16. The system (2) according to any one of claims 12 - 14, further comprising:
a second valve element (30) arranged to open and close a first body outlet opening (32) in the body (18); and,
- means (50, 52) for controlling the second valve element (30) to open the first body outlet opening (32) for evacuating air that has passed through the first radiator (14).

17. A vehicle (1), **characterized in that**
the vehicle (1) is provided with a system (2) according to any one of claims 12 - 16.
